# EUROPÄISCHE PATENTSCHRIFT

(11) **EP 2 304 221 B1**
(45) Veröffentlichungstag und Bekanntmachung des Hinweises auf die Patenterteilung: **03.04.2013**
(21) Anmeldenummer: 09775569.8
(22) Anmeldetag: 22.07.2009
(51) Int. Cl.: F02P 9/00, F02P 13/00, F02B 19/10, F02B 19/12, F02M 21/02

(54) **VORRICHTUNG ZUR ZÜNDUNG EINES TREIBSTOFF/LUFTGEMISCHS**
DEVICE FOR IGNITING A FUEL/AIR MIXTURE
DISPOSITIF D'ALLUMAGE D'UN MÉLANGE DE CARBURANT ET D'AIR

(30) Priorität: 22.07.2008 AT 11322008
(43) Veröffentlichungstag der Anmeldung: 06.04.2011
(73) Patentinhaber: GE Jenbacher GmbH & Co OG, 6200 Jenbach (AT)
(72) Erfinder: GRUBER, Friedrich, A-6283 Hippach (AT); LU, Hang, A-6330 Kufstein (AT); KRAUS, Markus, A-6210 Wiesing (AT)
(74) Vertreter: Gangl, Markus
(86) Internationale Anmeldenummer: PCT/AT2009/000283
(87) Internationale Veröffentlichungsnummer: WO 2010/009489

(56) Entgegenhaltungen:
- DE-A1- 3 638 711
- US-A- 3 974 412
- US-A- 4 582 475
- US-A- 4 744 341
- US-A- 5 222 993
- US-A- 5 517 961

## Beschreibung

Die Erfindung betrifft eine Vorrichtung zur Zündung eines Treibstoff/Luftgemischs im Brennraum einer Brennkraftmaschine, mit einer Elektrode, die mit einer Spannungsquelle verbunden ist und die in eine Vorkammer reicht, wobei die Vorkammer durch eine Wandung vom Brennraum zumindest bereichsweise abgetrennt ist, wobei eine Steuereinrichtung oder Regeleinrichtung vorgesehen ist, welche die Spannungszufuhr an die Elektrode derart regelt, dass in der Vorkammer eine Coronaentladung stattfindet, wobei die Wandung zumindest eine Öffnung zum Austausch von Fluiden zwischen Brennraum und Vorkammer aufweist. Weiters betrifft die Erfindung ein Verfahren zum Zünden eines Treibstoff/Luftgemischs im Brennraum einer Brennkraftmaschine. Schließlich betrifft die Erfindung eine Brennkraftmaschine umfassend eine Vorrichtung der vorgenannten Art.

Zur Zündung von Otto-Motoren sind nach Stand der Technik unterschiedliche Zündkonzepte vorgesehen. Derzeit erfolgt die Zündung zum überwiegenden Teil mittels sogenannter Funkenzündanlagen, die beispielsweise eine Zündkerze umfassen. Aufgrund ständig steigender Anforderungen an den Wirkungsgrad bei gleichzeitig emissionsarmer Verbrennung wird zunehmend auf alternative Zündtechnologien zurückgegriffen. Eine Möglichkeit stellt beispielsweise die sogenannte Coronazündung dar, wie sie unter anderem in der US 6,883,507 oder in der FR 2 886 689 A1 beschrieben wird.

Bei Coronazündanlagen wird das Treibstoff/Luftgemisch durch hoher elektrische Feldstärken ohne sogenannte Bogenentladung gezündet. Im Gegensatz zu Funkenzündanlagen wird bei der Coronazündung nur eine Glimmentladung, nicht jedoch die Ausbildung einer lawinenartigen Bogenentladung zugelassen. Von Bogenentladung spricht man dann, wenn ein Durchschlag mit der Ausbildung eines elektrischen Zündfunkens zwischen den Elektroden entsteht. Zum Unterschied zwischen Koronazündung und Funkenzündung sei auf die einschlägige Literatur verwiesen, beispielsweise auf die "Encyclopedia of Physics" (Third, Completely Revised and Enlarged Edition, Edited by Rita G. Lerner and George L. Trigg, Volume 1, Seiten 84 bis 89 und Seiten 394 bis 397).

Für die Coronazündanlage wird zur Erzeugung hoher Feldstärken üblicherweise eine Elektrode im Zylinderkopf der Brennkraftmaschine, welche vorzugsweise als Spitze ausgeführt wird, eingesetzt. Als Gegenelektrode wird üblicherweise der Brennraum verwendet. Der Kolben und die Unterseite des Zylinderkopfs bilden die Masseelektrode für die Coronazündeinrichtung.

Es hat sich gezeigt, dass eine Verbrennung mittels Coronazündung stark von der Brennraumgeometrie, der Motorausrüstung und der Kolbenstellung abhängig ist. Um diese Probleme in den Griff zu bekommen schlägt die FR 2 886 689 A1 vor, die Coronazündung in einer Vorkammer vorzunehmen, über die dann die eigentliche Zündung im Brennraum erfolgt. Vorkammerzündung beruht auf dem Konzept, dass ein erstes Treibstoff/Luftgemisch in der Vorkammer gezündet wird und über Übertrittsbohrungen dieses so gezündete Treibstoff/Luftgemisch in den Brennraum der Brennkraftmaschine übertreten kann, wo die Zündung des eigentlichen Treibstoff/Luftgemischs erfolgt. Zur Erzeugung der elektrischen Feldstärken, welche zur Zündung des Treibstoff/Luftgemischs führen, sind hohe elektrische Spannungen erforderlich, welche maßgeblich durch die Elektrodenanordnung und den Abstand der Elektroden zueinander bestimmt werden. Die hohen Spannungen sind jedoch durch mehrere Faktoren begrenzt. Die Spannungen müssen erzeugt werden und auf die Elektrode im Zylinderkopf übertragen werden. Durch den Platzbedarf im Zylinderkopf und die Auswahl des Isolatormaterials ergeben sich Grenzen für die Übertragung dieser hohen Spannungen. Bei sehr großen Brennräumen, wie diese beispielsweise in stationären Gas-Otto-Motoren vorkommen, die ein Haupteinsatzgebiet der Erfindung darstellen, ist die Elektrodenanordnung zur Brennraumgeometrie problematisch, da einerseits der Kolben sehr große Wege zurücklegt und andererseits die benötigten Spannungen durch die räumliche Anordnung sehr hoch sind. Wird eine Verstellung des Zündzeitpunktes notwendig oder sind lange Corona-Zeiten für den Betrieb der Brennkraftmaschine erforderlich, variiert der Bedarf der Hochspannung sehr stark.

Um die Coronazündung unabhängig von der Form und der Kolbenposition auszuführen, ist es daher zweckmäßig die Masseelektrode in Form einer Vorkammer auszuführen.

Die in der FR 2 886 689 beschriebene Art der Vorkammerzündung zeigt, dass der Treibstoff in den Brennraum eingespritzt wird wo er sich schichtet. Die Einspritzung des Treibstoffs erfolgt derart, dass ein bestimmter Anteil des Treibstoffs über die Öffnungen in die Vorkammer treten kann. Eine auf diese Art betriebene Brennkraftmaschine neigt im Betrieb zu Zündaussetzern. Beispielsweise können Ablagerungen die Öffnungen verstopfen. Bei herkömmlicher Funkenentladung werden solche Ablagerungen rasch weggebrannt. Bei der Coronazündung werden die Ablagerungen aufgrund der niedrigeren Feldstärken nicht weggebrannt. Coronazündung kann nur in einem schmalen Band an elektrischer Feldstärke stabil betrieben werden. Ablagerungen, die einen für ordnungsgemäßen Fluidaustausch zwischen Vorkammer und Brennraum verhindern können also dazu führen, dass aufgrund des unzureichenden Fluidaustauschs der Spannungsregler die Spannungszufuhr an die Elektrode nachführt. Im Extremfall können dadurch die Elektrode und die zugrunde liegenden hochsensiblen elektronischen Bauteile dauerhaft beschädigt werden.

Aufgabe der vorliegenden Erfindung ist es daher, eine Vorrichtung der eingangs genannten Art bereit zu stellen, bei der die elektronischen Bauteile der Coronaentladung weniger leicht beschädigt werden können.

Diese Aufgabe wird mit einer Vorrichtung, vorzugsweise Zündvorrichtung, der eingangs genannten Gattung gelöst, die gekennzeichnet ist durch einen Fluideinlass, welcher in die Vorkammer mündet. Über den Fluideinlass kann zur Spülung der Vorkammer ein Fluid eingelassen werden. Im bevorzugten Fall ist der Fluideinlass mit einer Treibstoffquelle verbunden, da so Treibstoff oder ein Treibstoff/Luftgemisch in die Vorkammer eingelassen werden können und die Treibstoffzufuhr unabhängig von den herkömmlichen Einlassventilen erfolgt. Der erfindungsgemäße Fluideinlass ist also zusätzlich zu dem wenigstens einen Einlassventil und dem wenigstens einen Auslassventil vorgesehen. Der Fluideinlass mündet direkt in die Vorkammer, während die Einlassventile, über die die Treibstoffzufuhr zum Brennraum erfolgt, aber auch die Auslassventile direkt in den Brennraum münden.

Die oben gestellte Aufgabe wird auch durch ein Verfahren zum Zünden eines Treibstoff/Luftgemischs im Brennraum einer Brennkraftmaschine mittels Coronazündung mit einer Vorrichtung der vorgenannten Art gelöst, wobei über den Fluideinlass in die Vorkammer ein Fluid, vorzugsweiseTreibstoff, eingelassen wird.

Durch den direkten Einlass von Treibstoff ist die Coronaentladung in der Vorkammer nicht mehr darauf angewiesen, dass Treibstoff aus dem Brennraum der Brennkraftmaschine in die Vorkammer diffundiert, sondern es kann direkt auf Treibstoff zurück gegriffen werden, der über den Fluideinlass eingebracht wird. In der Praxis wird sehr häufig reiner Treibstoff oder zumindest ein fetteres Treibstoff/Luftgemisch in die Vorkammer eingelassen als in den Brennraum. Unter einem fetteren Treibstoff/Luftgemisch versteht man, dass das Verhältnis von Treibstoff zu Sauerstoff größer ist als bei einem magereren Gemisch. Ein fetteres Gemisch verbessert die Entflammungsbedingung und reduziert den Energiebedarf für die Zündung.

Damit sich die Corona in der Vorkammer gut ausbreiten kann gut entwickeln kann, hat es sich als günstig erwiesen, wenn Vorkammer Bereiche mit unterschiedlichen Querschnittsinnenflächen aufweist, wobei die Querschnittsinnenfläche im Bereich der wenigstens einen Öffnung kleiner ist, als die Querschnittsinnenfläche im Bereich in dem die Elektrode in die Vorkammer eintritt. In einer Ausführungsvariante kann dabei vorgesehen sein, dass die Vorkammer mehrteilig ausgebildet ist. Beispielsweise kann eine erste Vorkammer, die im Bereich in dem die Elektrode in die Vorkammer eintritt angeordnet ist, und eine zweiten Vorkammer im Bereich der wenigstens einen Öffnung vorgesehen sein. Günstigerweise ist das Volumen der ersten Vorkammer größer ist als das Volumen der zweiten Vorkammer. Auf diese Art und Weise kann die Coronazündung besonders effizient erfolgen. Dabei hat es sich als besonders günstig erwiesen, wenn der Fluideinlass in die erste Vorkammer mündet.

Die einfachste Gestaltung sieht vor, dass die Öffnung als Bohrung ausgebildet ist, wobei für den optimalen Zündbetrieb im Brennraum vorgesehen sein kann, dass die Längserstreckung der Bohrung einen von 180° verschiedenen Winkel mit der Längserstreckung der Elektrode innerhalb der Vorkammer einschließt. Im einfachsten Fall ist vorgesehen, dass die Wandung mit Ausnahme der wenigstens einen Öffnung zum Austausch von Fluiden die Elektrode vollständig umgibt. Hinsichtlich des Fluideinlasses hat es sich als günstig erwiesen, wenn der Fluideinlass ein Ventil umfasst. Diese Variante ist besonders günstig bei Gas-Otto-Motoren erwiesen, die ein bevorzugtes Einsatzgebiet der Erfindung darstellen. Gas-Otto-Motoren werden mit einem bei Normalbedingungen gasförmigen Treibstoff wie z.B. Methan betrieben.

Im Einsatz haben sich verschiedene Elektrodenformen als günstig erwiesen. Neben einer herkömmlichen länglichen Spitzenform waren Elektroden mit kugelförmigem Ende, mit pilzförmigem Ende (d.h. im Querschnitt etwa T-förmig), mit mehreren vorzugsweise spitz zulaufenden Enden, mit abgeflachtem Ende etc. vorteilhaft.

Eine besonders effektive Coronazündung kann dann erzielt werden, wenn die Elektrode im Bereich der Vorkammer im Querschnitt etwa T-förmig ausgebildet ist. In einer weiteren Ausführungsvariante hat es sich als günstig erwiesen, wenn die Eletrode mehrere Spitzen aufweist.

Gerade in Vorkammern kann es zu einer inhomogenen Treibstoffverteilung kommen, sodass Bereiche mit höheren λ-Werten und niedrigeren λ-Werten auftreten können. (Unter den λ-Wert versteht man das Verbrennungsluftverhältnis, das heißt das Verhältnis von Luft zu Kraftstoff zur Verbrennung, wobei λ = 1 ein stöchiometrisches Verhältnis, λ größer 1 einen Luftmangel und λ kleiner 1 einen Luftüberschuss bedeutet.) Die Coronazündung hat den Vorteil, dass gerade jene Bereiche mit niedrigeren λ zuerst gezündet werden und so eine ideale Zündung erfolgt. Die Streamer verteilen sich so optimal im Raum. Durch die Form der Elektroden, das heißt eigentliche Elektrode, die in die Vorkammer reicht und Gegenelektrode, die in der Regel von der Vorkammerwandung gebildet wird, ergeben sich auch Vorteile in der elektrischen Feldsteuerung.

Die Erfindung betrifft neben der vorgenannten Vorrichtung und dem vorgenannten Verfahren auch eine Brennkraftmaschine mit einer solchen Vorrichtung und zur Durchführung eines solchen Verfahrens. Bevorzugt handelt es sich bei der Brennkraftmaschine um eine Gas-Otto-Motor, im stationären Betrieb.

Weitere Vorteile und Details der Erfindung ergeben sich aus den folgenden Figuren und Figurenbeschreibungen. Es zeigt:
- Fig. 1 die: grob schematisch eine erfindungsgemäße Vorrichtung im Querschnitt und
- Fig. 2 - 7: Ausführungsvarianten der wichtigsten Bereiche erfindungsgemäßer Vorrichtungen.

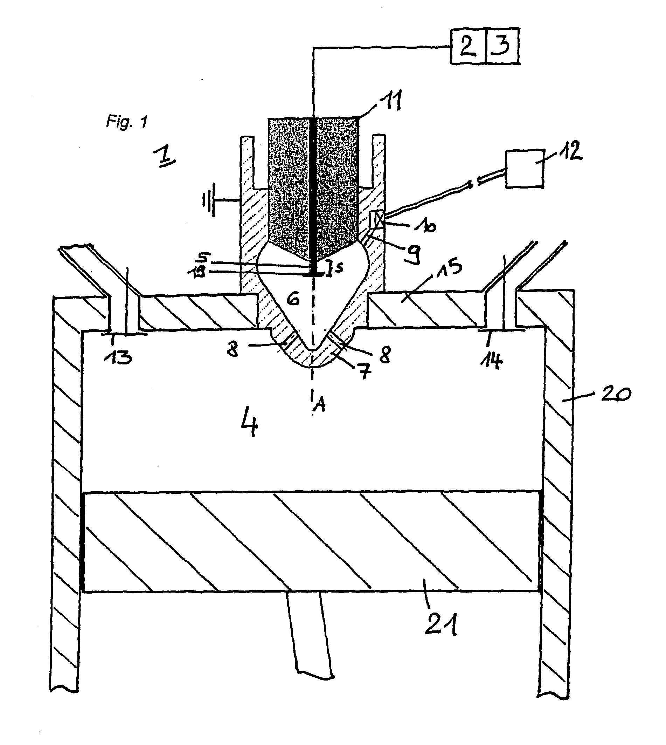

In der Fig. 1 ist Vorrichtung 1 zur Zündung eines Treibstoff/Luftgemischs im Brennraum 4 einer nur grob skizziert dargestellten Brennkraftmaschine gezeigt. Aus Gründen der Übersichtlichkeit ist nur ein Zylinder 20 gezeigt, in dem ein Kolben 21 sich auf- und abwärts bewegt. Die Vorrichtung 1 umfasst eine Elektrode 5, die über eine Energieübertragungseinheit 25 (hier in der Form eines elektrischen Leiters) mit einer Spannungsquelle 2 verbunden ist. Die Elektrode 5 reicht mit einem Abschnitt S in die Vorkammer 6 der Vorrichtung 1. Die Vorkammer 6 wird zum Brennraum 4 hin durch die Wandung 7 bereichsweise abgetrennt. Die Wandung 7 bildet die Gegenelektrode, sodass sich zwischen Elektrode 5 und Wandung 7, die geerdet ist, ein elektrisches Feld ausbildet, wenn die Spannungsquelle 2 die Elektrode 5 mit Spannung versorgt. Bei ausreichender Feldstärke bildet sich in der Vorkammer 6 eine Corona. Hierfür ist noch eine Steuereinrichtung 3 oder Regeleinrichtung 3 vorgesehen, welche die Spannungszufuhr an die Elektrode 5 derart regelt, dass in der Vorkammer 6 die Coronaentladung stattfindet. Steuer- bzw. Regeleinrichtung 3 und Spannungsquelle 2 sind der Einfachheit halber zusammen und nur grob schematisch dargestellt. Die Spannungsquelle 2 und die Steuerung 3 bzw. Regelung 3 können beispielsweise wie in der FR 2 886 689 A1 oder in der US 6,883,507 beschrieben gewählt werden, es sind aber auch andere Spannungsquellen 2 und Steuer- bzw. Regeleinrichtungen 3 denkbar.

Die Wandung 7 weist mehrere Öffnungen 8 (zwei sind im Querschnitt hier in der Form von Bohrungen sichtbar) auf, die den Austausch von Fluiden zwischen Brennraum 4 und Vorkammer 6 ermöglichen. Durch den Fluideinlass 9, welcher in die Vorkammer 6 mündet, kann ein Fluid eingelassen werden. Im gezeigten Ausführungsbeispiel ist der Fluideinlass 9 mit einer Treibstoffquelle 12 verbunden, über die reiner Treibstoff einlassbar ist. Genauso gut könnte ein Treibstoff/Luftgemisch eingelassen werden, sodass in diesem Fall beispielsweise eine Mischvorrichtung, wie ein Gasmischer vorgesehen sein könnte, der Treibstoff wie z.B. Methan mit Luft vorher mischt. Um die Treibstoffzufuhr zu regeln ist im vorliegenden Fall ein Einlassbegrenzer in der Form eines Ventils 10 vorgesehen. Ein solches Ventil 10 ist z.B. beim erfindungsgemäß besonders bevorzugten Einsatz bei stationären Gas-Otto-Motoren günstig, da gasförmiger Treibstoff mit dem Ventil dosiert werden kann. Es sind aber auch andere, nach Stand der Technik vorgesehene Einlassbegrenzer 10 möglich.

Der Leiter 25 ist von einem Isolator 11 umgeben. Aus dem Isolator 11 heraus ragt die Elektrode 5 in die Vorkammer 6 mit einem Abschnitt S. Der Isolator 11 umgibt den Leiter 25 und isoliert ihn elektrisch von der Wandung 7.

Die Vorkammer 6 ist im Bereich der Öffnungen 8 im Querschnitt enger ausgebildet als im Bereich in dem die Elektrode 5 in die Vorkammer 6 eintritt. Das bedeutet, dass der Querschnitt, d.h. jener Bereich senkrecht zur Längserstreckung A der Elektrode 5 einen größeren Querschnitt aufweist als im Bereich der Öffnungen 8. Die Elektrode 5 ist im gezeigten Ausführungsbeispiel im Bereich innerhalb der Vorkammer 6 im Querschnitt etwa T-förmig ausgebildet, da so eine günstige Entladung stattfinden kann. Wie das Ausführungsbeispiel zeigt, reicht die Vorrichtung 1 im Einbauzustand in den Brennraum 4 einer Brennkraftmaschine. Die Zündvorrichtung 1 könnte beispielsweise in den Zylinderkopf 15 der Brennkraftmaschine mittels eines nicht gezeigten Gewindes eingeschraubt sein. Das gezeigte Ausführungsbeispiel, aber auch jene der anderen Figuren zeigen, dass der Isolator 11 zwischen Leiter 25 und Wandung 7 zum Elektrodenende hin spitz zulaufend ausgebildet ist. Dies stabilisiert einerseits die Elektrode 5 in mechanischer Hinsicht und gewährleistet gleichzeitig eine bessere Strömung am Treibstoff/Luftgemisch in der Vorkammer.

Nach erfolgter Coronazündung im Bereich der Vorkammer 6 kann über die Öffnungen 8 das glimmentladungsgezündete Treibstoff/Luftgemisch in den Brennraum 4 übertreten und dort das eigentliche Treibstoff/Luftgemisch entzünden. Das Treibstoff/Luftgemisch im Brennraum 4 wird über das Einlassventil 13 eingelassen. Nach der Zündung kann der Verbrennungsrückstand über das Auslassventil 14 wieder ausgelassen werden. Der Fluideinlass 9 ist wie dargestellt von den herkömmlichen Einlassventilen 13 und Auslassventil 14 gesondert. D.h. es ist eine von dem bzw. den Einlassventilen 13 gesonderte Fluidzufuhr 9 vorgesehen, die nicht in den Brennraum 4 mündet, sondern direkt in die Vorkammer 6.

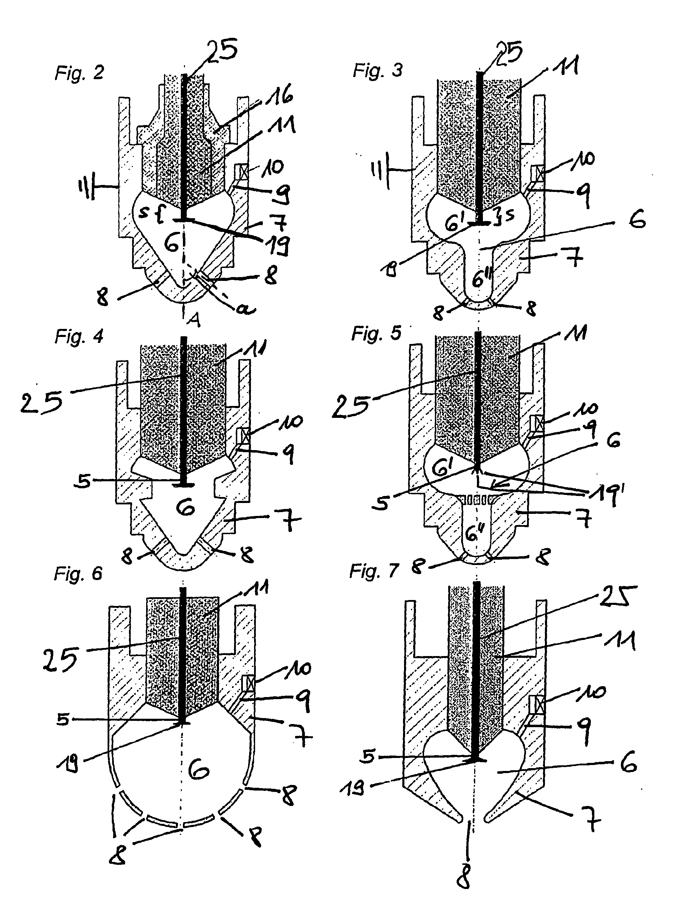

Die Fig. 2 bis 7 zeigen unterschiedliche Ausführungsvarianten erfindungsgemäßer Vorrichtungen 1, wobei auf einige Bauteile, die z.B. wie in Fig. 1 ausgebildet sein können, aus Gründen der besseren Übersichtlichkeit verzichtet wurde. Insbesondere wird dabei die Geometrie der einzelnen Vorkammern 6 beschrieben. Die Varianten der Fig. 3 und 5 zeigen dabei zweiteilige Vorkammern 6 mit einer ersten Vorkammer 6' und einer zweiten Vorkammer 6", wobei das Volumen der ersten Vorkammer 6' größer ist als das Volumen der zweiten Vorkammer 6" ist. Der Fluideinlass 9 mündet in den Bereich der ersten Vorkammer 6'. Zwischen erster Vorkammer 6' und zweiter Vorkammer 6" der Fig. 5 sind noch Verengungen eingebracht, die den Fluiddurchtritt und die Fluidströmung zwischen den beiden Vorkammern 6', 6" beeinflussen. Die Ausführungsvariante der Fig. 4 zeigt eine sich nach hinten, d.h. in dem Bereich, in dem die Elektrode 5 in die Vorkammer 6 eintritt, eine Verbreiterung auf. Diese begünstigt das Strömungsverhalten in der Vorkammer 6. Die Fig. 6 zeigt eine einfache halbkugelförmige Vorkammergeometrie mit mehreren Öffnungen 8 in mehrere Richtungen. In Fig. 7 ist nur eine einzelne Öffnung in der Verlängerung der Längserstreckung A der Elektrode 5 im Bereich der Vorkammer 6. In den Beispielen der Fig. 1 bis 5 schließen die Bohrungen 8 einen von 180° verschiedenen Winkel (a) mit der Längserstreckung der Elektrode 5 in der Vorkammer 6 ein. Das Ausführungsbeispiel der Fig. 2 zeigt zusätzlich noch einen sogenannten Kerzenfuß 16, der den Isolator 11 samt Elektrode 5 am Gehäuse samt Wandung der Vorrichtung 1 besser verankert.

Die Ausführungsvarianten der Fig. 1 bis 4 und 6 und 7 zeigen dabei Elektroden 5, die im Bereich der Vorkammer 6, d.h., dort wo sie aus dem Isolator 11 austreten und in die Vorkammer 6 reichen im Querschnitt etwa T-förmig ausgebildet. Im Prinzip entspricht die Form auch einer Pilzform bzw. Nagelform, d.h., dass an einen Schaft ein scheibenförmiges Ende 19 aufgebracht ist. Im Beispiel der Fig. 5 weist die Elektrode 5 mehrere Enden 19' auf, die eine Art Kronenform bilden.

Wie bereits oben in der Beschreibung erwähnt, könnte die Form des Elektrodenendes 19 aber z.B. auch kugelförmig oder in sonst einer günstigen Form ausgebildet sein.

Die Öffnungen 8 können unterschiedliche Formen aufweisen. Beispielsweise können der Einfachheit halber runde Öffnungen 8 (beispielsweise Bohrungen) vorgesehen sein. Alternativ können diese auch polygonartig ausgebildet sein - es hängt insbesondere auch von der Geometrie des Brennraums 4 ab. In einigen Ausführungsvarianten hat es sich gezeigt, dass die Größe der Öffnungen 8 in Abhängigkeit der Brennraumgeometrie 4 variiert werden kann. Daraus können sich unterschiedlich große Querschnitte bei mehreren Öffnungen 8 ergeben. Die einfachste Variante sieht allerdings mehrere gleich große Öffnungen 8 vor. Die Vorkammer 6 kann außerdem eine gleichmäßige Oberfläche oder alternativ dazu spitzenförmige Erhebungen zur Feldsteuerung für die Coronaentladung aufweisen. Die Vorkammer 6 kann mit Treibstoff oder Treibstoff/Luftgemisch gespült werden. Sollte nur reiner Treibstoff eingebracht werden, sollte eine geringe Menge an Sauerstoff vom Treibstoff/Luftgemisch aus dem Brennraum 4 über die Übertrittsöffnungen 8 in die Vorkammer 6 rückströmen. Alternativ dazu kann im Normalbetrieb vorgesehen sein, dass die Vorkammer 6 nur mit einem Treibstoff/Luftgemisch aus dem Brennraum 4 versorgt wird und nur bei Vorliegen einer Verstopfung oder Störung die Gaszuführung über den Fluideinlass 9 erfolgt, was über die Regel- oder Steuereinrichtung 4 geregelt bzw. angesteuert werden kann.

## Patentansprüche

1. Vorrichtung zur Zündung eines Treibstoff/Luftgemischs im Brennraum (4) einer Brennkraftmaschine, mit einer Elektrode (5), die mit einer Spannungsquelle (2) verbunden ist und die in eine Vorkammer (6) reicht, wobei die Vorkammer (6) durch eine Wandung (7) vom Brennraum (4) zumindest bereichsweise abgetrennt ist und die Wandung (7) eine Gegenelektrode bildet, wobei eine Steuereinrichtung (3) oder Regeleinrichtung (3) vorgesehen ist, welche die Spannungszufuhr an die Elektrode (5) derart regelt, dass in der Vorkammer (6) eine Coronaentladung stattfindet, wobei die Wandung (7) zumindest eine Öffnung (8) zum Austausch von Fluiden zwischen Brennraum (4) und Vorkammer (6) aufweist, **gekennzeichnet durch** einen Fluideinlass (9), welcher in die Vorkammer (6) mündet.

2. Vorrichtung nach Anspruch 1, **dadurch gekennzeichnet, dass** der Fluideinlass (9) mit einer Treibstoffquelle (12) verbunden ist.

3. Vorrichtung nach Anspruch 1 oder Anspruch 2, **dadurch gekennzeichnet, dass** die Vorkammer (6) Bereiche mit unterschiedlichen Querschnittsinnenflächen aufweist, wobei die Querschnittsinnenfläche im Bereich der wenigstens einen Öffnung (8) kleiner ist, als die Querschnittsinnenfläche im Bereich in dem die Elektrode (5) in die Vorkammer eintritt.

4. Vorrichtung nach einem der Ansprüche 1 bis 3, **dadurch gekennzeichnet, dass** die Vorkammer (6) zumindest zweiteilig ausgebildet ist, mit einer ersten Vorkammer (6') im Bereich der Elektrode (5) und einer zweiten Vorkammer (6") im Bereich der wenigstens einen Öffnung (8), wobei das Volumen der ersten Vorkammer (6') größer ist als das Volumen der zweiten Vorkammer (6").

5. Vorrichtung nach Anspruch 4, **dadurch gekennzeichnet, dass** der Fluideinlass (9) in die erste Vorkammer (6') mündet.

6. Vorrichtung nach einem der Ansprüche 1 bis 5, **dadurch gekennzeichnet, dass** die Öffnung (8) als Bohrung ausgebildet ist.

7. Vorrichtung nach Anspruch 6, **dadurch gekennzeichnet, dass** die Längserstreckung der Bohrung (8) einen von 180° verschiedenen Winkel mit der Längserstreckung der Elektrode (5) innerhalb der Vorkammer (6) einschließt.

8. Vorrichtung nach einem der Ansprüche 1 bis 7, **dadurch gekennzeichnet, dass** die Wandung (7) mit Ausnahme der wenigstens einen Öffnung (8) zum Austausch von Fluiden die Elektrode (5) zum Brennraum (4) vollständig umgibt.

9. Vorrichtung nach einem der Ansprüche 1 bis 8, **dadurch gekennzeichnet, dass** der Fluideinlass (9) ein Ventil (10) umfasst.

10. Vorrichtung nach einem der Ansprüche 1 bis 9, **dadurch gekennzeichnet, dass** die Elektrode (5) im Bereich innerhalb der Vorkammer (6) im Querschnitt etwa T-förmig ausgebildet ist.

11. Vorrichtung nach einem der Ansprüche 1 bis 9, **dadurch gekennzeichnet, dass** das Ende (19) der Elektrode (5) eine Form, ausgewählt aus der Gruppe Kugelform, Pilzform, Stabform, Sternform, Spitzenform, aufweist.

12. Verfahren zum Zünden eines Treibstoffl/Luftgemischs im Brennraum (4) einer Brennkraftmaschine mittels Coronazündung mit einer Vorrichtung (1) nach einem der Ansprüche 1 bis 11, wobei über den Fluideinlass (9) in die Vorkammer (6) zumindest ein Fluid, vorzugsweise Treibstoff, eingelassen wird.

13. Verfahren nach Anspruch 12, **dadurch gekennzeichnet, dass** der Treibstoff gasförmig ausgebildet ist.

14. Verfahren nach Anspruch 12 oder Anspruch 13, **dadurch gekennzeichnet, dass** reiner Treibstoff über den Fluideinlass (9) in die Vorkammer (6) eingelassen wird.

15. Brennkraftmaschine umfassend eine Vorrichtung nach einem der Ansprüche 1 bis 11.

## Claims

1. A device for igniting a fuel/air mixture in the combustion chamber (4) of an internal combustion engine, comprising an electrode (5) connected to a voltage source (2) and extending into a precombustion chamber (6), wherein the precombustion chamber (6) is separated at least region-wise from the combustion chamber (4) by a wall (7), wherein there is provided a control device (3) or regulating device (3) which regulates the supply of voltage to the electrode (5) in such a way that a corona discharge takes place in the precombustion chamber (6), wherein the wall (7) has at least one opening (8) for the exchange of fluids between the combustion chamber (4) and the precombustion chamber (6), **characterized by** a fluid inlet (9) opening into the precombustion chamber (6).

2. A device as set forth in claim 1, **characterized in that** the fluid inlet (9) is connected to a fuel source (12).

3. A device as set forth in claim 1 or 2, **characterized in that** the precombustion chamber (6) has regions with different cross-sectional internal surfaces, wherein the cross-sectional internal surface is smaller in the region of the at least one opening (8) than the cross-sectional internal surface in the region in which the electrode (5) passes into the precombustion chamber.

4. A device as set forth in one of claims 1 through 3, **characterized in that** the precombustion chamber (6) is of an at least two-part configuration comprising a first precombustion chamber (6') in the region of the electrode (5) and a second precombustion chamber (6") in the region of the at least one opening (8), the volume of the first precombustion chamber (6') being larger than the volume of the second precombustion chamber (6").

5. A device as set forth in claim 4, **characterized in that** the fluid inlet (9) opens into the first precombustion chamber (6').

6. A device as set forth in one of claims 1 through 5, **characterized in that** the opening (8) is in the form of a bore.

7. A device as set forth in claim 6, **characterized in that** the longitudinal extent of the bore (8) includes an angle different from 180° with the longitudinal extent of the electrode (5) within the precombustion chamber (6).

8. A device as set forth in one of claims 1 through 7, **characterized in that** the wall (7) completely surrounds the electrode (5) in relation to the combustion chamber (4) with the exception of the at least one opening (8) for the exchange of fluids.

9. A device as set forth in one of claims 1 through 8, **characterized in that** the fluid inlet (9) includes a valve (10).

10. A device as set forth in one of claims 1 through 9, **characterized in that** the electrode (5) is of a substantially T-shaped cross-sectional configuration in the region within the precombustion chamber (6).

11. A device as set forth in one of claims 1 through 9, **characterized in that** the end (19) of the electrode (5) is of a shape selected from the group consisting of a spherical shape, a mushroom shape, a bar shape, a star shape and a point shape.

12. A method of igniting a fuel/air mixture in the combustion chamber (4) of an internal combustion engine by means of corona ignition with a device (1) as set forth in one of claims 1 through 11, wherein at least one fluid, preferably fuel, is let into the precombustion chamber (6) by way of the fluid inlet (9).

13. A method as set forth in claim 12, **characterized in that** the fuel is gaseous.

14. A method as set forth in claim 12 or 13, **characterized in that** pure fuel is introduced into the precombustion chamber (6) by way of the fluid inlet (9).

15. An internal combustion engine including a device as set forth in one of claims 1 through 11.

## Revendications

1. Dispositif d'allumage d'un mélange carburant/air dans la chambre de combustion (4) d'un moteur à combustion, avec une électrode (5) reliée à une source de tension (2) et dépassant dans une chambre de précombustion (6), la chambre de précombustion (6) étant séparée au moins partiellement de la chambre de combustion (4) par une paroi (7) et la paroi (7) constituant une contre-électrode, un dispositif de commande (3) ou un dispositif de régulation (3) étant prévu, qui régule l'alimentation en tension de l'électrode (5) de façon à ce que, dans la chambre de précombustion (6), une décharge coronaire ait lieu, la paroi (7) présentant au moins une ouverture (8) permettant un échange de fluide entre la chambre de combustion (4) et la chambre de précombustion (6), **caractérisé par** une entrée de fluide (9) qui débouche dans la chambre de précombustion (6).

2. Dispositif selon la revendication 1, **caractérisé en ce que** l'entrée de fluide (9) est reliée à une source de carburant (12).

3. Dispositif selon la revendication 1 ou la revendication 2, **caractérisé en ce que** la chambre de précombustion (6) comprend des zones avec des surfaces internes de sections différentes, la surface interne de section au niveau de l'au moins une ouverture (8) étant inférieure à la surface interne de section dans la zone dans laquelle l'électrode (5) entre dans la chambre de précombustion.

4. Dispositif selon l'une des revendications 1 à 3, **caractérisé en ce que** la chambre de précombustion (6) est formée d'au moins deux parties, avec une première chambre de précombustion (6') au niveau des électrodes (5) et une deuxième chambre de précombustion (6") au niveau d'au moins une ouverture (8), le volume de la première chambre de précombustion (6') étant supérieur au volume de la deuxième chambre de précombustion (6").

5. Dispositif selon la revendication 4, **caractérisé en ce que** l'entrée de fluide (9) débouche dans la première chambre de précombustion (6').

6. Dispositif selon l'une des revendications 1 à 5, **caractérisé en ce que** l'ouverture (8) est réalisée comme un alésage.

7. Dispositif selon la revendication 6, **caractérisé en ce que** l'extension longitudinale de l'alésage (8) forme, avec l'extension longitudinale de l'électrode (5), à l'intérieur de la chambre de précombustion (6), un angle différent de 180°.

8. Dispositif selon l'une des revendications 1 à 7, **caractérisé en ce que** la paroi (7) entoure complètement, à l'exception de l'au moins une ouverture (8) pour l'échange de fluides, l'électrode (5) vers la chambre de combustion (4).

9. Dispositif selon l'une des revendications 1 à 8, **caractérisé en ce que** l'entrée de fluide (9) comprend une soupape (10).

10. Dispositif selon l'une des revendications 1 à 9, **caractérisé en ce que** l'électrode (5) présente, dans la zone à l'intérieur de la chambre de précombustion (6), une section approximativement en forme de T.

11. Dispositif selon l'une des revendications 1 à 9, **caractérisé en ce que** l'extrémité (19) de l'électrode (5) présente une forme choisie dans le groupe : sphère, champignon, barre, étoile, pointe.

12. Procédé d'allumage d'un mélange carburant/air dans la chambre de combustion (4) d'un moteur à combustion à l'aide d'un allumage coronaire avec un dispositif (1) selon l'une des revendications 1 à 11, au moins un fluide, de préférence un carburant, étant introduit par l'intermédiaire de l'entrée de fluide (9) dans la chambre de précombustion (6).

13. Procédé selon la revendication 12, **caractérisé en ce que** le carburant se présente sous forme gazeuse.

14. Procédé selon la revendication 12 ou la revendication 13, **caractérisé en ce que** du carburant pur est introduit dans la chambre de précombustion (6) par l'intermédiaire de l'entrée de fluide (9).

15. Moteur à combustion comprenant un dispositif selon l'une des revendications 1 à 11.
